# EUROPEAN PATENT APPLICATION

(11) **EP 4 661 337 A1**
(43) Date of publication of application: **10.12.2025**
(21) Application number: 24180513.4
(22) Date of filing: 06.06.2024
(51) Int. Cl.: H04L 9/08, H04B 10/70

(54) **QKD SYSTEM AND METHOD WITH IMPROVED START-UP PHASE**

(71) Applicant: ID Quantique S.A., 1227 Genève (CH)
(72) Inventor: BOSO, Gianluca, 1213 Petit-Lancy (CH)
(74) Representative: KATZAROV S.A.

(57) **Abstract**

The present invention relates to a Quantum Key Distribution system comprising an emitter and a receiver adapted to exchange QKD-based keys comprising at least one controller wherein, when the system is switched on, the controller is configured to execute a start-up phase comprising an optics calibration and a subsequent preliminary qubit exchange phase wherein the controller is configured to improve system performance and to judge whether the QKD statistics results in a positive key rate, characterized in that the qubit exchange phase comprises the emitter and the receiver exchanging qubits without authentication and without sending keys to the user.

## Description

### Technical Field

The present invention relates to Quantum Key Distribution (QKD) technology and more particularly to a method and a system for improving the start-up phase of a QKD communication process.

### Background of the art

Quantum key distribution, in the following also referred to as QKD, is part of the general quantum cryptography technology and is a method allowing the distribution of a secret key between two distant parties: the emitter, usually called Alice, and the receiver, usually called Bob, with a provable absolute security. Quantum key distribution relies on quantum physics principles and encoding information in quantum states, or qubits, as opposed to classical communication's use of bits. Usually, photons are used for these quantum states. Quantum key distribution exploits certain properties of these quantum states to ensure its security.

More particularly, the security of this method comes from the fact that the measurement of a quantum state of an unknown quantum system modifies the system itself. In other words, a spy eavesdropping on a quantum communication channel cannot get information on the key without introducing errors in the key exchanged between the emitter and the receiver, thereby informing the user of an eavesdropping attempt.

In a QKD system, many protocols may be used, for example BB84, which itself may have several forms or implementation, COW, BB92 and the same.

In any QKD protocol, the security proof of the protocol itself is based on the assumption that the two parties (Alice/transmitter, Bob/receiver) communicate over an authenticated channel during the key exchange. To authenticate the communication between Alice and Bob, different authentication protocols can be used, e.g. Wegman-Carter authentication.

All these protocols require that Alice and Bob share a key used to authenticate a certain amount of information exchanged in the channel. An initial pre-shared key is loaded in the systems by the users when they install it for the first time, with a USB key for example. Once the authentication is started, this key is consumed, and it is replaced by keys that Alice and Bob share between them during the quantum key distribution protocol.

In practice, a part of the keys generated goes to the user (main functionality of a QKD system) and the rest is used to make sure that Alice and Bob always have keys to perform the authentication between them.

However, if there is a problem with the quantum key distribution protocol, for example because of too many errors or too much loss in the quantum channel, Alice and Bob might run out of keys to use and "consume" all their stock. In this case, the QKD protocol cannot continue, the system will stop, and the user is required to manually upload fresh "pre-shared keys".

In such case, the authentication key is used up but never replenished, arriving at a point where manual user intervention is required to provide fresh pre-shared keys.

In conventional systems, one tries to optimize as much as possible in terms of success rate the key exchange by checking if the conditions are not good, but it doesn't assure a 100 % success rate.

In view of the above, there is a need to improve the time and the success rate of the key exchange step needed to run the start-up phase.

The object of the present invention is therefore to provide a system and a method which permit to improve the success rate of the start-up phase.

### Summary of the invention

The above problems are solved by the present invention which is based on a new functioning mode of the start-up phase where the QKD system launches a dummy key exchange, equivalent to a normal key exchange but without authentication and without sending keys to the user. This dummy key exchange is used to run the optimization algorithms to improve system performance and to check that the QKD statistics are good enough to have a positive key rate. If this step is successful, the normal key exchange starts, uses an initial key and outputs secret keys to the user.

This allows a direct evaluation of the possibility to exchange keys via a dummy key exchange. In this way no initial key is wasted, and manual user intervention is not needed any more in case of problems.

A first aspect of the invention is a quantum Key Distribution system comprising an emitter and a receiver adapted to exchange QKD-based key comprising at least one controller wherein, when the system is switched on, the controller is configured to execute a start-up phase comprising an optics calibration and a subsequent preliminary qubit exchange phase wherein the controller is configured to improve system performance and to judge that the QKD statistics results in a positive key rate, characterized in that the qubit exchange phase comprises the emitter and the receiver exchanging qubits without authentication and without sending keys to the user

Preferably, in the subsequent preliminary qubit exchange phase, the controller is configured to run an optimization algorithm.

Advantageously, when the controller judges that the QKD statistics results in a positive key exchange, the normal key exchange starts and uses an initial key and outputs secret keys to the user.

According to a preferred embodiment of the present invention, once the normal key exchange starts, the emitter and the receiver carry out a Privacy Amplification.

Preferably, after the Privacy Amplification, the emitter and the receiver share an error corrected and secure set of bits that can be used as keys.

Advantageously, a part of the set of bits are used to fill up an authentication buffer to authenticate the communication between the emitter and the receiver and the rest is sent to the user to be used as keys.

Preferably, during the optics calibration, the controller is configured to track parameters of the system and record them in said memory upon switch off of the system, and is configured to retrieve said recorded parameters of the system and apply them to the system upon a subsequent start-up phase.

A second aspect of the invention is a Quantum Key Distribution method to be implemented by the Quantum Key Distribution system of the first aspect comprising Alice sending random qubits to Bob, Bob decoding the qubits and sends information to Alice about its measurement, Alice and Bob then performing error correction on their respective bits, Alice, using the statistics measured and announced by Bob and the security proof typical of the protocol, deciding how many of the bits they shared have to be discarded because potentially unsafe, Alice and Bob using the same statistics as a feedback value to optimize their encoding and decoding strategy, and judging whether the QKD statistics results in a positive key rate.

Advantageously, the Quantum Key Distribution method comprises a first step prior to the qubit exchange step including a calibration start-up phase including a parameter tracking step comprising tracking and measuring optical parameters of the system, a last parameter recording step comprising recording the last parameters upon switch off of the QKD system, a retrieving step comprising retrieving said last recorded parameters of the system and apply them to the system upon a subsequent start-up phase following said switch off.

### Brief description of the drawings

Further particular advantages and features of the invention will become more apparent from the following non-limitative description of the embodiments of the invention which will refer to the accompanying drawings, wherein:
- Figure 1 is a block diagram showing a conventional QKD method,
- Figure 2 is a block diagram showing a QKD calibration method according to a first embodiment of the present invention, and
- Figure 3 is a block diagram showing a QKD calibration method according to a second embodiment of the present invention, and
- Figure 4 is a block diagram showing a QKD calibration method according to combination of the first embodiment and the second embodiment of the present invention.

### Detailed description of the invention

The present detailed description is intended to illustrate the invention in a non-limitative manner since any feature of an embodiment may be combined with any other feature of a different embodiment in an advantageous manner.

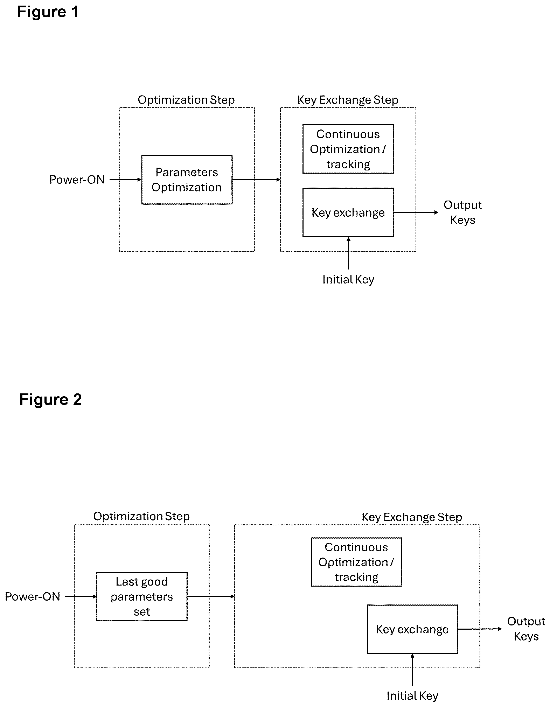

Figure 1 shows a conventional start-up phase of a QKD calibration method where the start-up phase comprises a first step consisting in a parameter optimization and a second step, subsequent to the first phase, consisting in a key exchange.

The first step concretely consists in calibrating the optics of the emitter and/or the receiver of the QKD system. This first step is followed by the second step which is a key exchange step where one starts exchanging a key between the emitter and the receiver and where an initial key is a pre-shared key and during which the optimization continues while key exchange is performed. As explained above, this conventional method requires some time to optimize communication, especially in the first step. There is therefore a need to shorten this first step.

Figure 2 is a block diagram showing a QKD calibration method according to a first embodiment of the invention, where the QKD system comprises an emitter and a receiver adapted to communicate through a quantum channel.

The system comprises at least one memory and at least one controller, wherein the controller is adapted to track and measure the different parameters of the system and record them in the memory when it detects that the system is switched off. Preferably, the controller can continuously record the parameters of the system in a dedicated memory which is preferably a cache memory.

This allows to keep the last implemented parameters, which are preferably the last optimized parameters thanks to the tracking and optimizing process, recorded in a memory which can be embedded or not in the system.

Subsequently, when the QKD system is switched-on again and a subsequent start-up phase is carried out, the controller is able to immediately retrieve said parameters, which were lastly recorded in said memory, and apply them to the system. This permits therefore to avoid a full recalibration phase like in the first phase of the conventional system depicted in figure 1, and to carry out an immediate application of the best parameters previously measured. As a result, the first phase is drastically shortened.

The above system and method were described for a system comprising a single emitter and a single receiver, however, of course, the system can be configured for a network comprising several emitters and several receivers in an NxM model, where N is the number of emitters and M is the number of receivers. In such case, the at least one controller, preferably each controller i.e. one per link, is capable of tracking and recording the parameters for each communication couple (link) independently and retrieve the last optimized parameters for each communication link independently.

The above-mentioned parameters, which are optimized, may vary. Indeed, examples of optical alignment steps needed may comprise anyone of the following provided that they depend on the protocol:
The first one is the bias voltage of the intensity modulator at the emitter.

An optimization of the bias voltage of the intensity modulator at the emitter is needed to optimize the extinction ratio of the modulator and hence the Quantum Bit Error Rate (QBER). The principle here is to measure the received errors at the receiver and tune the bias voltage of the modulator at the emitter to get the best QBER.

A second one is the phase between the interferometer of the emitter and the receiver.

An optimization of the phase between the interferometer of the emitter and the receiver because these two interferometers need to be phase locked. To do so, a measurement of the interferometer of the receiver is performed (typically its visibility) and some parameter of the interferometer of the emitter is tuned (e.g. its temperature, or the delay of one of the two arms with a piezo-electric controller) while a light signal is transmitted between Alice and Bob.

Additional parameters may comprise the laser bias current at the emitter or the modulation voltage of the phase modulator at the emitter and/or the receiver.

In addition to the above-described first embodiment improving the first step, the present invention also comprises a second embodiment which permits to improve the second phase.

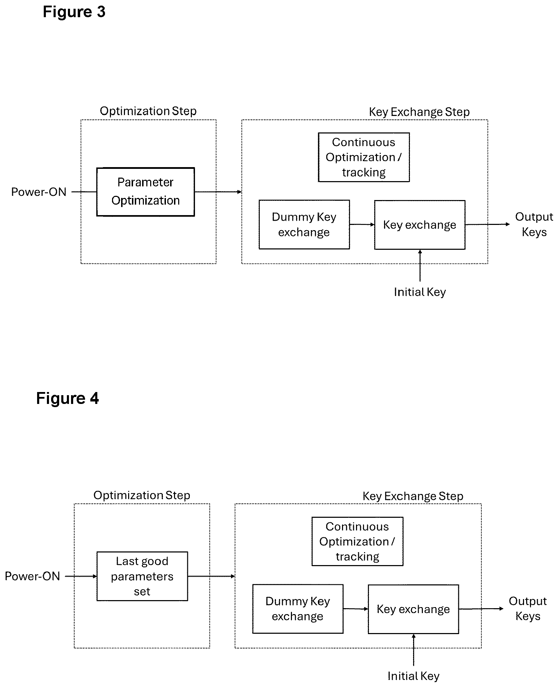

Figure 3 is a block diagram showing a QKD calibration method according to a second embodiment, where the QKD system comprises an emitter and a receiver adapted to communicate through a quantum channel.

Usually, the second step of the start-up phase, i.e. the normal QKD key exchange, requires the following steps:
1. First, Alice sends random qubits, i.e. photons encoded in different states/basis, to Bob through the quantum channel.
2. When Bob receives the qubits, it decodes the qubits and sends information to Alice about its measurement. This phase is called sifting.
3. Alice and Bob then perform error correction on their respective bits.
4. Alice, using the statistics measured and announced by Bob and the security proof typical of the protocol (e.g. BB84), decides how many of the bits they shared have to be discarded because potentially unsafe, and
5. Alice and Bob use the same statistics as a feedback value to optimize their encoding and decoding strategy, e.g. they might change the bias voltage of the Intensity Modulator at Alice to minimize the QBER.
6. Alice and Bob discard these bits with a processing mechanism called Privacy Amplification.
7. After this, Alice and Bob share an error corrected and secure set of bits that can be used as keys.
8. Part of these bits are used to fill up the authentication buffer to authenticate the communication between Alice and Bob, the rest is sent to the user to be used as "keys".

All communication between Alice and Bob, from point 1 to 8 is authenticated. It's a security requirement of the protocol.

The inventors have noted that outside of the key exchange functionality, a QKD system doesn't need an authenticated communication and that Alice and Bob can communicate without authentication and without key exchange between each other for a lot of auxiliary tasks like the calibration / alignment routines that must be performed when the system I switched on.

This is the case, for example, when the clock of Alice and Bob must be aligned in frequency and phase, and in some protocols when the phase of the interferometer of Alice must be aligned with the phase of the interferometer of Bob and the same.

A second embodiment of the present invention therefore relates to a QKD system and method which avoids consuming "pre-shared keys" when Alice and Bob are not able to perform a normal QKD exchange and hence generate new ones.

The Quantum Key Distribution system typically comprises an emitter and a receiver adapted to exchange QKD-based key and at least one controller which executes a start-up phase comprising an optics calibration and a subsequent preliminary qubit exchange phase. According to this second embodiment, the controller is configured to improve system performance and to judge that the QKD statistics are good enough, which means that it results in a positive key rate. The qubit exchange phase comprises the emitter and the receiver exchanging qubits without authentication and without sending keys to the user.

A positive key-rate means, for example, in a BB84 security proof, that one measures a set of statistics and we input them in a formula that calculates the compression ratio (basically how many bits are kept and how many are discarded. During the dummy key exchange, one calculates this. If the system can exchange a positive key rate (hence > 0) then the result is positive. and when the controller judges that the QKD statistics results in a positive key exchange, the normal key exchange starts and uses an initial key and outputs secret keys to the user.

In other words, the method and the system of the present invention carries out a start-up phase where the second step consists in a so-called "dummy key-exchange", where Alice and Bob, after the first calibration step explained above in reference to figure 2, starts a QKD key exchange described in points 1 to 5 above like a conventional one but with two main differences:
(i) all the communication between Alice and Bob in point 1 to 5 is not authenticated and it doesn't consume authentication keys, and
(ii) the process stops at step 5, therefore steps 6-8 are avoided, and no keys are given to the user, since they are not secure.

In this manner, Alice and Bob have all the statistical analysis like in a real key exchange thanks to steps 1-5. They can also use it to optimize their protocol and check that the quality of their qubit exchange is good enough to have a key > 0 at the end of the process. However, here steps 6, 7 and 8 are not performed and no keys are sent to the user.

This key exchange is used to make sure that Alice and Bob are able to perform the protocol. During this step, one can measure the errors generated, the number of keys per second generated and other parameters that we can use as a go/no-go threshold to decide to move to a real key exchange that consumes authentication keys but also generates new keys for the system and for the user.

A third embodiment of the invention is shown in figure 4 and relates to a combination of the first and second embodiment.

In this third embodiment, the first, calibration, step of the start-up phase is using the last optimized, recorded, parameters as described above, and is followed by a second step without authentication and with no key exchange.

While the embodiments have been described in conjunction with a number of embodiments, it is evident that many alternatives, modifications and variations would be or are apparent to those of ordinary skill in the applicable arts. Accordingly, this disclosure is intended to embrace all such alternatives, modifications, equivalents and variations that are within the scope of this disclosure. This is, for example particularly the case regarding the different apparatuses which can be used.

## Claims

1. Quantum Key Distribution system comprising an emitter and a receiver adapted to exchange QKD-based keys comprising at least one controller wherein, when the system is switched on, the controller is configured to execute a start-up phase comprising an optics calibration and a subsequent preliminary qubit exchange phase wherein the controller is configured to improve system performance and to judge that the QKD statistics results in a positive key rate, **characterized in that** the qubit exchange phase comprises the emitter and the receiver exchanging qubits without authentication and without sending keys to the user

2. Quantum Key Distribution system according to claim 1, **characterized in that** in the subsequent preliminary qubit exchange phase, the controller is configured to run optimization algorithm.

3. Quantum Key Distribution system according to any one of claims 1 or 2, **characterized in that** when the controller judges that the QKD statistics results in a positive key exchange, the normal key exchange starts and uses an initial key and outputs secret keys to the user.

4. Quantum Key Distribution system according to claim 3, **characterized in that** once the normal key exchange starts, the emitter and the receiver carry out a Privacy Amplification.

5. Quantum Key Distribution system according to claim 4, **characterized in that** after the Privacy Amplification, the emitter and the receiver share an error corrected and secure set of bits that can be used as keys.

6. Quantum Key Distribution system according to claim 5, **characterized in that** a part of the set of bits are used to fill up an authentication buffer to authenticate the communication between the emitter and the receiver and the rest is sent to the user to be used as keys.

7. Quantum Key Distribution method according to any one of claims 1 to 6, **characterized in that** during the optics calibration, the controller is configured to track parameters of the system and record them in said memory upon switch off of the system, and is configured to retrieve said recorded parameters of the system and apply them to the system upon a subsequent start-up phase.

8. Quantum Key Distribution method to be implemented by the Quantum Key Distribution system of claims 1 to 7 comprising
Alice sending random qubits to Bob,
Bob decoding the qubits and sending information to Alice about its measurement,
Alice and Bob then performing error correction on their respective bits,
Alice, using the statistics measured and announced by Bob and the security proof typical of the protocol, deciding how many of the bits they shared have to be discarded because potentially unsafe,
Alice and Bob using the same statistics as a feedback value to optimize their encoding and decoding strategy, and
Judging whether the QKD statistics results in a positive key rate.

9. Quantum Key Distribution method of claim 8 comprising
a first step prior to the qubit exchange step including a calibration start-up phase including
a parameter tracking step comprising tracking and measuring optical parameters of the system,
a last parameter recording step comprising recording the last parameters upon switch off of the QKD system,
a retrieving step comprising retrieving said last recorded parameters of the system and applying them to the system upon a subsequent start-up phase following said switch off.
